# EUROPEAN PATENT SPECIFICATION

(11) **EP 3 743 696 B1**
(45) Date of publication and mention of the grant of the patent: **10.09.2025**
(21) Application number: 19714844.8
(22) Date of filing: 25.01.2019
(51) Int. Cl.: G01G 19/52, G01G 23/37

(54) **PALLET WITH INTEGRATED WEIGHING FUNCTION**
PALETTE MIT INTEGRIERTER WÄGEFUNKTION
PALETTE À FONCTION DE PESAGE INTÉGRÉE

(30) Priority: 26.01.2018 NL 2020327
(43) Date of publication of application: 02.12.2020
(73) Proprietor: Ahrma Holding B.V., 7418 AM Deventer (NL)
(72) Inventor: EKKEL, Frederik, 5672 HK Nuenen (NL)
(74) Representative: Nederlandsch Octrooibureau
(86) International application number: PCT/NL2019/050042
(87) International publication number: WO 2019/147130

(56) References cited:
- WO-A1-2017/179985
- CN-A- 103 308 134
- DE-A1- 19 964 217
- JP-A- 2006 017 466

## Description

### Field of the invention

The present invention relates to a pallet, or like platform, for supporting a load to be lifted or lowered, comprising:
- a deck having a deck upper surface for placing the load thereon,
- a load sensor device, comprising a weighing element included in a measuring circuit.

### Background art

JP2006017466 provides a platform scale of a simple structure capable of gauging an article in a laid state, and to provide a gauge system and an inventory management method capable of efficiently managing inventory through the use of the platform scale. Therefore, the platform scale, also pallet, is provided with insertion parts for the insertion of arm parts of a fork lift truck. The bottom part of the platform scale is provided with load cells for scaling the weight of an article laid on the pallet. The pallet transmits scale data to a data processor, which is provided with both a processing means for processing scale data and a display means for displaying the scale data, by a radio communication means provided in the control part. Adding multiple load cells to the pallet to scale weight is complex and expensive. Moreover, measuring a point load at one or more positions, may easily result in inaccurate results.

The document WO2017/179985 discloses a pallet with a weighing element according to the state of the art.

### Summary of the invention

The current invention has for its object to provide a pallet with an integrated weighing function to be able to weigh items on the pallet, wherein the pallet has a simple structure without compromising accuracy.

The current invention has for a further object to provide a pallet with an integrated weighing function that at least partly solves a problem with such known pallets.

A further object of the current invention is to provide an alternative pallet with an integrated weighing function.

Therefore, the present invention provides a pallet, or like platform, for supporting a load to be lifted or lowered, comprising:
- a deck having a deck upper surface for placing the load thereon,
- a load sensor device, comprising a weighing element included in a measuring circuit,
wherein the weighing element contacts the deck over a contact area such that the weighing element deforms in unity with the deck and an electrical property of the weighing element varies with the deformation of the weighing element.

The weighing element contacting the deck over a contact area such that the weighing element deforms in unity with the deck assures accuracy under various load conditions of the pallet because deformation of the deck is measure instead of a pure weight on the pallet. In other words, different load scenarios can be detected because deformation of the deck is measured. Or to put it differently, the weighing element deforming in unity with the deck, means that the weighing element and the deck deform according to a similar or identical mode of deformation.

An example of detecting a load scenario is that when empty pallets are stacked. In this scenario, the deck will hardly deform out of plane, or in other words bend. When pure weight is detected, this scenario is hard to distinguish. However when, according to the invention, deformation modes are detected, this load scenario of stacked empty pallets can be distinguished.

It is conceivable that deformation of a part of a deck is measured however it is preferred that the deck is a monodeck that deforms as a whole. In addition, this allows a highly integration of the load sensor device with the pallet.

"The weighing element contacting the deck over a contact area such that the weighing element deforms in unity with the deck" means that the weighing element and the deck deform in a same way. In other words, the deck imposes a deformation to the weighing element. Therefore, the weighting element is attached or secured to the deck over the entire contact area, however any other solution to impose a deformation from the deck to the weighing element may suffice.

The electric property may be any suitable property like for example resistance, capacitance, and inductance.

In an embodiment, the pallet comprises a support structure for spacing the deck from a supporting surface like a floor, wherein the weighing element is restricted between the support structure and the deck, in particular constrained with respect to movement of the weighing element transverse with respect to the deck upper surface. This facilitates weighing of items on the pallet because the supporting structure allows out of plane deformation of the deck and enables to constrain the weighing element with respect to the deck.

The weighing element being restricted between the support structure and the deck means for example containing, retaining, locking or clamping the weighing element between the support structure and the deck.

In an embodiment of the pallet, the weighing element contacts the deck over the contact area through a spacing member arranged between the deck and the weighing element. Introducing a spacing member enables to have a better control of the contact between the weighing element and the deck for example in connection with manufacturing tolerances. The spacing member, also spacer, then helps to define the contact area and moves with the deck and weighing element when the deck deforms. A single spacer or a number of spacers may be used as long as the weighing element deforms with the deck. The spacer may contact the deck over a portion of the contact area between the weighing element and the deck.

In an embodiment of the pallet, the deck has a deck lower surface, wherein the weighing element contacts the deck lower surface over the contact area. This allows a simple stacked configuration of the pallet with integrated weighing function.

In an embodiment of the pallet, the support structure comprises at least one block for spacing the deck from the supporting surface and the weighing element is restricted between the block and the deck lower surface. This even more allows out of plane deformation of the deck. It will be clear that a block can be any element that protrudes from the deck and spaces the deck from the supporting surface of the pallet like the ground or a factory floor.

In an embodiment of the pallet, the at least one block comprises a central block. Central is to say centrally positioned with respect to the pallet. This central block enables to recognize certain load conditions like a symmetrically applied load of a load at the outer circumference of the pallet.

In an embodiment of the pallet, the block comprises a receptacle and the weighing element is at least partly, in particular entirely, arranged in the receptacle. This facilitates integration of the load sensor device with the pallet.

In an embodiment of the pallet, the receptacle is sized such that it extends beyond a side of the weighing element opposite the deck lower surface to facilitate deformation of the weighing element. This facilitates deformation of the weighing element in that the weighing element can flex into the receptacle.

In an embodiment of the pallet, the weighing element comes into abutment with the block at the outer circumference of the weighing element only. This facilitates deformation of the weighing element because the weighing element is supported at the outer circumference of the weighing element while a central portion of the weighing element is freely movable.

In an embodiment of the pallet, the weighing element comprises a layered structure. The layered structure enables to adjust properties of the weighing element. The properties may in include bending stiffness, electrical properties etc.

In an embodiment of the pallet, the weighing element comprises a flexible layer facing the deck, wherein the flexible layer defines the contact area. The use of a flexible layer that contacts the deck even more assures that the weighing element and the deck deform according to a similar or identical mode of deformation.

In an embodiment of the pallet, the spacing member is included in the flexible layer. The spacing member included in the flexible layer helps to position the spacing member, also spacer, with respect to the deck.

In an embodiment of the pallet, the flexible layer comprises an adhesive to secure the weighing element to the deck. This helps to define the contact area over the product life of the pallet.

In an embodiment of the pallet, the adhesive is electrically conductive, and in particular the conductive properties change due to deformation of the flexible layer. This facilitates measuring the deformation of the deck by the measuring circuit in that the sensitivity of the measuring element for deformation can be improved. Changing conductive properties of the flexible layer due to deformation of the flexible layer can for example be enabled by mixing carbon particles to the flexible layer.

In an embodiment of the pallet, the weighing element comprises an adhesive layer to secure the weighing element to the deck, and wherein in particular the spacing member is at least partly included in the adhesive layer. The spacing member in combination with the adhesive layer allows end of assembly line adjustments to the load sensor device. The adhesive layer assures that the weighing element deforms or flexes in unity with the deck. The adhesive layer determines the contact area between the deck and the weighing element.

In an embodiment of the pallet, the weighing element comprises a pair of layers that form a cavity in between the pair of layers. This allows a layer to flex into the cavity and at the same time compare electrical properties of the layers of the pair of layers.

In an embodiment of the pallet, the weighing element comprises a multilayer PCB having a spacing layer that allows a neighbouring layer to deform, in particular to flex in unity with the deck. This allows integration of the measuring circuit with the weighing element. It will be clear that any required circuitry can be integrated with the weighing element.

In an embodiment of the pallet, the weighing element comprises a number of measurement sections, wherein in particular the number of measurement are spatially distributed over the weighing element to facilitate discrimination between different modes of deformation of the deck. This allows to compare electrical properties of measurement sections which can improve accuracy.

In an embodiment of the pallet, the deck upper surface for placing the load thereon is a unitary or monolithic load supporting surface. In other words, the deck is made of a single element forming a continuous plane upper surface. The unitary or monolithic load supporting surface has a predictable response to a load on the pallet. The response is that as seen by the weighing element. This is in particular important in case of a pallet having one load sensor device.

In an embodiment, the pallet comprises a skid, wherein the at least one block, in particular a plurality of blocks, spaces/space the skid from the deck. This skid gives strength and cohesion to the pallet and also defines the response of the deck to a load on the pallet.

In an embodiment, the pallet comprises a number of weighing elements, wherein each respective weighing element is integrated in a respective block. This can improve accuracy of the load sensor device in certain load scenarios of the pallet.

In an embodiment, the pallet comprises means to communicate data in a wireless manner, the data comprising a pallet identification and a degree of load on the pallet. This allows to integrate the pallet in a logistic system like a fleet or inventory management system.

Therefore, the present invention also provides a method for manufacturing a pallet of the invention, the method comprising calibrating the load sensor device, in particular calibrating the load sensor device after integrating the load sensor device with the pallet. This improves accuracy of the pallet with integrated weighing function.

### Brief description of the drawings

The features and advantages of the invention will be appreciated upon reference to the following drawings of a number of exemplary embodiments, in which:
Figure 1 shows a perspective view of a pallet according to the present invention;
Figure 2 shows the pallet of Figure 1 in exploded perspective view;
Figure 3 shows a detail of Fig 1 namely a block prepared to accommodate a load sensor device, comprising a weighing element;
Figure 4a is a perspective view of another embodiment of a block of Fig.3;
Figure 4b is a cross sectional perspective view of the block of Fig. 4a;
Figure 5 is a side view of a load sensor device;
Figure 6 is a detail of another embodiment of a load sensor device in exploded perspective view;
Figure 7 shows a detail III of the pallet of Figure 1 in partially cut-away view;
Figure 8 shows a schematic view of the architecture of an electronic tag for use in the invention; and
Figure 9 shows a schematic view of a pallet logistic system according to the invention.

### Detailed description of drawings

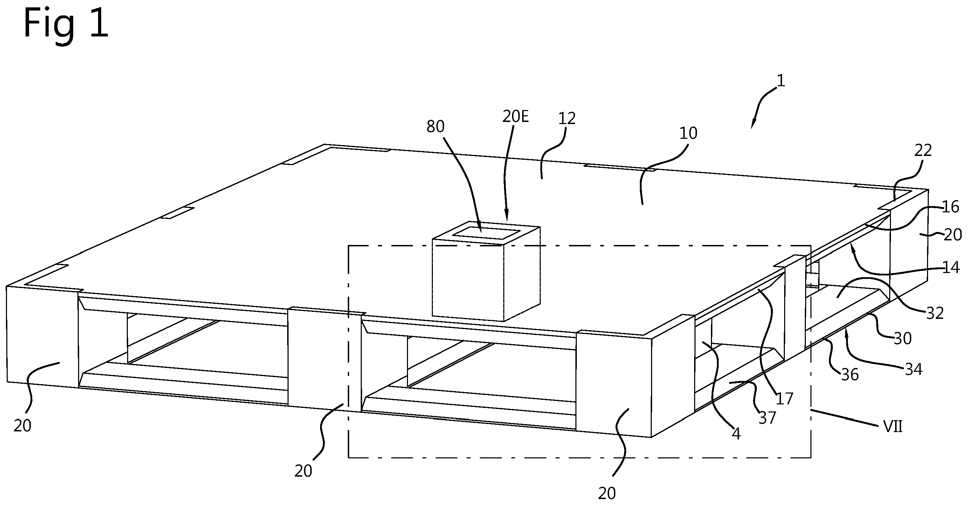

Figure 1 shows a perspective view of a pallet 1 according to the present invention in its ready to use state. The illustrated pallet is of conventional Euro Pallet dimensions (1200 mm x 800 mm x 144 mm). It includes a deck 10 having a deck upper surface 12 a deck lower surface 14 and a deck peripheral edge 16. When a load is placed on the deck 10, the deck 10 deforms as a unit. The deck 10 has its own specific deformation modes depending on a specific load scenario of the pallet 1. Blocks 20 are provided beneath the deck 10 and space the deck 10 from a skid 30. The skid 30 also has a skid upper surface 32 a skid lower surface 34 and a skid peripheral edge 36. The skid 30 and blocks 20 together are also referred to as "support structure". The support structure 20, 30 spaces the deck 10 from a supporting surface like a floor. When the pallet 1 carries a load, the deck 10 deforms. The central block 20E comprises electronic system 80. The deck 10 deforms as a unit. Openings 4 between the blocks 20 allow the forks of a fork lift truck to be inserted under the deck 10 to engage the deck lower surface 14 for lifting the pallet 1 as is otherwise conventional.

The blocks 20 are provided with sleeve portions 22 that extend upwards, covering the deck peripheral edge 16 to a position level with the deck upper surface 12. The sleeve portions 22 also extend downwards and overlap the skid peripheral edge 36. Furthermore, it may be seen that the deck peripheral edge 16 and the skid peripheral edge 36 are provided with chamfers 17, 37 at the location of the openings 4. This facilitates access by a fork-lift and reduces any damage due to the fact that an impact may be deflected.

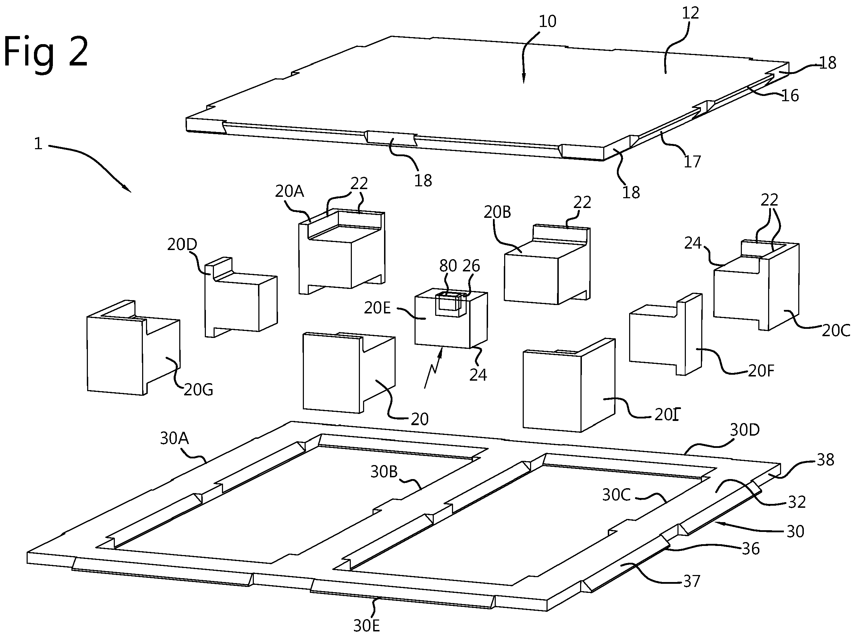

Figure 2 shows the pallet 1 of Figure 1 in exploded view whereby the individual elements that form the pallet 1 can be better seen. Turning first to the deck 10, it can be seen that the deck peripheral edge 16 has cutaway regions 18 at the corners and in the middle of each side. Between the cutaway regions 18 are the chamfers 17. In this embodiment, the deck peripheral edge 16 is either cutaway or chamfered around the full periphery although it will be understood that these regions may be spaced from each other.

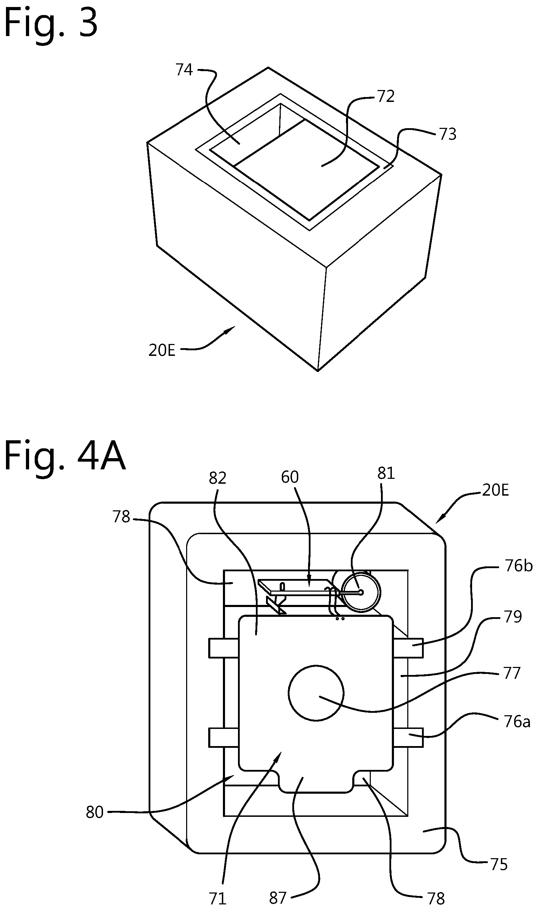

There are in total nine blocks 20A-I, of which all except the central block 20E, comprise sleeve portions 22 and spacer portions 24. The central block 20E comprises only a spacer portion 24. The corner blocks 20A, 20C, 20G and 20I all have angled sleeve portions 22, while the side blocks 20B, 20D, 20F and 20H in the middle of each side, have straight sleeve portions 22. The sleeve portions 22 all extend above the respective spacer portion 24 by a distance that corresponds to the thickness of the deck 10 and have a width that corresponds to a depth of the cutaway regions 18. This ensures that the deck 10 can be recessed into the sleeve portions 22 with an exterior surface of the sleeve portions 22 being co-linear with the deck peripheral edge 16. The central block 20E comprises a cavity 26 in which is located an electronic system 80. The electronic system 80 includes a tag 60, shown in fig. 4a. The tag 60 is a proprietary electronic active RFID chip-based, track and trace device with incorporated battery, capable of transmitting over ranges of up to 300 metres, available from BM Innovations GmbH under the name BlueRobinTM, operation of which will be described in further detail below. Other similar devices such as Bluetooth low power (BLE) devices may also be used.

The skid 30 is similar in terms of the skid peripheral edge 36, which has cutaway regions 38 at locations corresponding to the blocks 20. The parts of the skid peripheral edge that are not cut away are chamfered at chamfers 37. In the disclosed embodiment, the deck 10 is closed but it will be understood that open or apertured decks may be used as appropriate. The illustrated skid 30 is a five member skid having first, second and third skid members 30A-C and front and back braces 30D, E. The skid 30 may be of conventional wooden construction with the skid members 30A-E being glued and pegged together in conventional manner. Alternatively, the whole skid may be of MDF or the like unitary construction. In the illustrated embodiment, all of the skid members 30A-E have chamfers on all sides. It will be understood that chamfering can also be limited to just the skid peripheral edge 36.

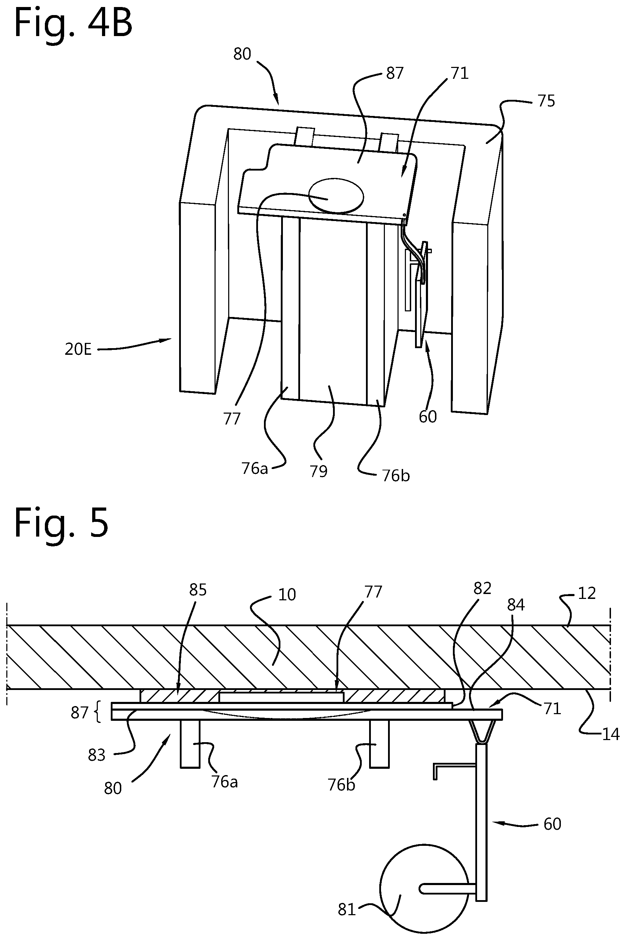

Figure 3 shows a detail of Fig 1 namely a block 20E. The block 20E is prepared to accommodate an electronic system 80 shown in fig. 5. The block 20E comprises a receptacle 72. The receptacle 72 is configured to accommodate the weighing element 87 shown in fig. 5. The receptacle 72 is sized such that it extends beyond a side of the weighing element 87 opposite the deck lower surface 14. This facilitates deformation of the weighing element 87. The weighing element 87 comes into abutment with the block 20E. The weighing element 87 comes into abutment with the block 20E at stop flange 73. The stop flange 73 extends around the receptacle 72. The receptacle 72 extends inwards beyond the stop flange 73. The weighing element 87 contacts the stop flange 73 at the outer circumference of the weighing element 87 only. The block 20E comprises a cavity 74. The cavity extends transverse with respect to the receptacle 72.

Another embodiment of a block 20E of Fig.3 is described referring to fig. 4a and 4b. Figure 4a is a perspective view of a block 20E. Figure 4b is a cross sectional perspective view of the block 20E of Fig. 4a. The block 20E accommodates an electronic system 80. The electronic system 80 comprises a load sensor device 71 and a tag 60. Electronic tag 60 is installed in the cavity 78 of the central block 20E and initialised. The tag 60 is battery 81 powered and designed to operate for a period of up to 10 years based on normally expected usage. The load sensor device 71 comprises a weighing element 87 as shown in fig. 4a. The block 20E comprises a hollow 78. The block 20E has a hollow structure. The hollow 78 is formed within a profile. The profile is square. The profile has a profile wall 75. The hollow 78 is configured to accommodate the weighing element 87 shown in fig. 5. The weighing element 87 comes into abutment with the block 20E. The weighing element 87 comes into abutment with the block 20E through two cross members 76a, 76b. The weighing element 87 contacts two cross members 76a, 76b. The two cross members 76a, 76b support the weighing element 87 in the hollow 78. The two cross members 76a, 76b divide the hollow 78. The two cross members 76a, 76b are mutually spaced. The two cross members 76a, 76b extend in parallel. A filling member 79 may be provided between the two cross members 76a, 76b. The two cross members 76a, 76b allow the weighing element 87 to deform. Therefore, the two cross members 76a, 76b engage the weighing element 87 to each make a line contact between the two cross members 76a, 76b and the weighing element 87. The weighing element 87 has a top layer 82. The top layer may directly contact the deck 10. As an alternative, or additionally, the weighing element 87 contacts the deck 10 through a spacer 77.

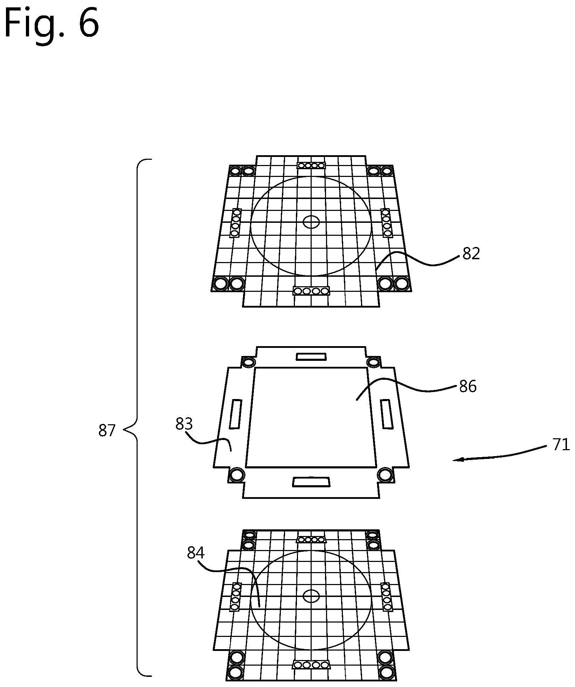

Figure 5 is a side view of an electronic system 80. The electronic system 80 comprises a load sensor device 71 and a tag 60. The load sensor device 71 comprises a weighing element 87. The weighing element 87 is shown in contact with the deck 10. The weighing element 87 contacts the deck lower surface 14. The weighing element 87 comprises a layered structure 82, 83, 84, 85 as is better shown in fig. 6. The weighing element 87 contacts the deck lower surface 14 through a flexible layer 85. The flexible layer 85 is deformable so that manufacturing tolerances can be accommodated and a defined contact area between the deck 10 and the weighing element 87 is determined by the flexible layer 85. The flexible layer 85 secures the weighing element 87 to the deck 10. The weighing element 87 contacts the deck 10 over a contact area such that the weighing element 87 deforms in unity with the deck 10 and an electrical property of the weighing element 87 varies with the deformation of the weighing element 87. As a result, at least the top layer 82 can flex in unity with the deck 10 as shown with a dash line.

The flexible layer 85 may comprises an adhesive to secure the weighing element 87 to the deck 10. As an option, the adhesive in the flexible layer 85 is electrically conductive. The conductive properties change due to deformation of the flexible layer 85.

The weighing element 87 is restricted between the support structure and the deck 10. The weighing element 87 is in particular constrained with respect to movement of the weighing element 87 transverse with respect to the deck 10. The weighing element 87 is restricted between the block 20E of e.g. fig. 4a and the deck lower surface 14. The weighing element 87 comes into abutment with the two cross members 76a, 76b of the block 20E. The block 20E is part of the support structure that spaces the deck 10 from a supporting surface like a floor.

In this case, the contact between the weighing element 87 and the deck 10 is also determined by a spacing member 77. The spacing member 77 is arranged between the deck 10 and the weighing element 87. Here, the spacing member 77 is incorporated or included in the adhesive layer 85. The entire spacing member 77 is incorporated in the adhesive layer 85. The spacing member 77 is positioned at a centre portion of the weighing element 87.

Figure 6 is a detail of another embodiment of the weighing element 87 of a load sensor device 71 in exploded perspective view. The weighing element 87 comprises a layered structure 82, 83, 84. The weighing element 87 has a top layer 82 and a bottom layer 84. This separation into layers facilitates introduction of electrical properties, like capacitance, between the top 82 and bottom layer 84 that can be varied and measured. Therefore, the weighing element 87 may comprise a number of measurement section. The number of measurement sections are spatially distributed over the weighing element 87 to facilitate discrimination between different modes of deformation of the deck 10.

The weighing element 87 has a core layer 83 between the top 82 and bottom layer 84. The core layer 83 has a cavity 86. In other words, the weighing element 87 comprises a pair of layers 82, 84 that form a cavity 86 in between the pair of layers 82, 84. The core layer 83, or also spacing layer 83, allows a neighbouring layer 82, 84 to deform. As a result, the top layer 82 can flex in unity with the deck 10.

In this case, the top 82, bottom 84, and core layer 83 do form a multilayer PCB. In other words, the weighing element 87 comprises a multilayer PCB 82, 83, 84. The multilayer PCB 82, 83, 84 has a spacing layer 83 that allows a neighbouring layer 82 to deform, in particular to flex in unity with the deck 10.

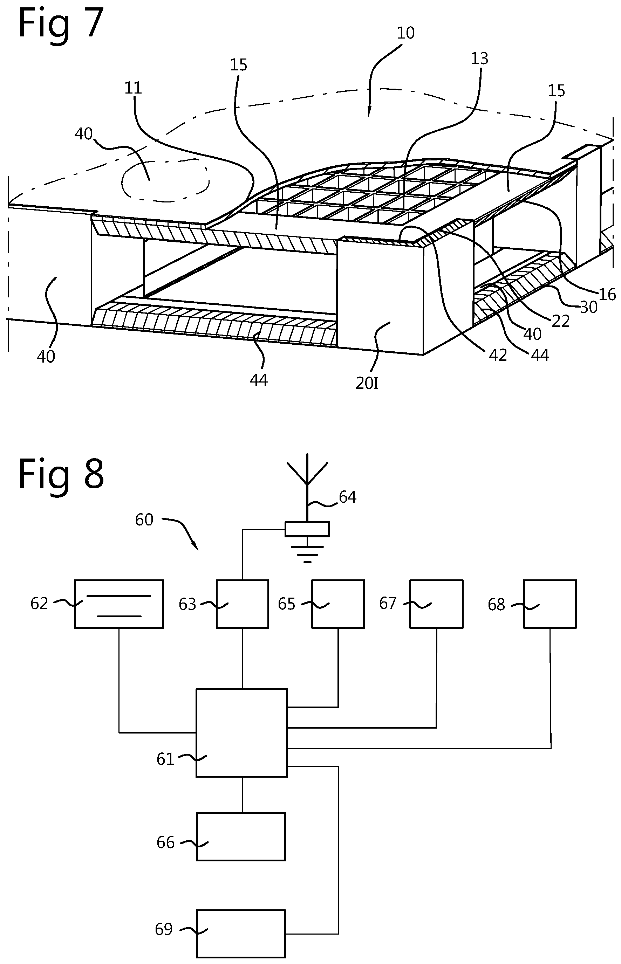

Figure 7 shows an enlarged partially cut-away view of detail III in Figure 1. According to this view, the deck 10 and part of the block 20I have been cut away to show the pallet construction. The deck 10 comprises an outer skin 11 of wood, covering an inner core 13 formed from slats of MDF material. In the illustrated embodiment, the skin 11 has a thickness of 3 mm. It will be understood that the outer skin may also be made of plywood, MDF or even of a composite e.g. laminated with fibre reinforced layers. Edge members 15, also of MDF, form the peripheral edge 16. These edge members 15 have a depth of 22 mm corresponding to the thickness of the core 13 and a width of 30 mm. This width is sufficient to allow cutaway regions 18 of around 15 mm, without unduly weakening the structure of the deck. The whole of the deck 10 is coated with a polyurethane resin coating 40, having a thickness of around 1 mm. The coating 40 provides a number of advantages to the pallet. Not only does it make the deck 10 stronger and more impact resistant but it is also waterproof, easily washable, anti-slip and can be used to provide a desirable colour or look.

The blocks 20 are also provided with the same coating 40 as the deck 10. They are glued to the deck 10 using an adhesive 42 that forms a relatively thick elastic bond between the elements. In the present embodiment, TEROSON MS 9399 TM is used, which is a two-component modified silane adhesive available from Henkel. An advantage of this adhesive is that it remains elastic even after curing and, while being sufficiently strong to prevent undesired separation, ensures shock absorption in case of impact on the pallet 10. The adhesive joint can also be easily broken using a cutting wire.

The skid 30 is also provided with the same coating 40, which covers it entirely. Adhesive 42 connects the skid 30 to the blocks 20. Also visible in this view are bumpers 44 provided on chamfers 17, 37 of the deck 10 and skid 30 respectively. The bumpers 44 are HDPE strips that are glued to and cover the chamfers 17, 37. Although not visible in this view, the bumpers 44 may be recessed into the material of the deck peripheral edge 16 and skid peripheral edge 36 respectively.

In production, the deck 10, blocks 20 and skid 30 are individually manufactured in the form as shown in Figure 2. The finished elements are then all coated with coating 40 prior to assembly. The blocks 20 are then adhered to the skid 30 using the adhesive 42 followed by application of the deck 10 with further adhesive 42 being placed onto the spacer portions 24 of the blocks 20. As a result, the deck 10 is spaced from a supporting surface and the deck 10 is free to deform as a unity in response to the weight of items placed on the deck 10.

In use, the sleeve portions 22 and the bumpers 44 fully protect the deck peripheral edge 16 and the skid peripheral edge 36 from any lateral shock due e.g. to incorrect insertion of a fork-lift into openings 4. In the case that damage does occur to the pallet 1, the elements that are damaged may be removed from the pallet 1 and replaced. In the case of damage to a single block 20, this may be removed by use of a wire cutter to cut adhesive 42 and separate the block 20 from the deck 10 and skid 30. This may involve first the removal of the sleeve portion 22 e.g. by cutting it away from the spacer portion 24. If the deck 10 or skid 30 is damaged, removal of all sleeve portions 22 may be desirable in order to conveniently cut away the blocks 20.

Figure 8 gives a schematic overview of the architecture of electronic tag 60. Tag 60 includes a processor 61, a battery 62 an input-output device 63, antenna 64, memory 65 and clock 66, which operate in a conventional manner to enable the tag 60 to communicate over distances of up to 300 metres with a suitably arranged receiver according to standard protocols including Bluetooth, Wi-Fi, ZigBee, Zensys, LoRa, 6LoWPAN, 433Mhz/868Mhz/915Mhz, 3G/4G/5G/LTE proprietary protocols or any other low power wide area network protocols.

The tag 60 is additionally provided with a temperature sensor 67, an accelerometer 68 and operationally coupled with the load sensor device 71, all of which communicate with the processor 61. It will be understood that other sensors may also be included as required. The load sensor device 71 is installed beneath the central block 20E and is calibrated during production to give a reading reflecting a distributed load supported on the deck 10. If required other calibrations may be applied depending on the nature of the product to be transported.

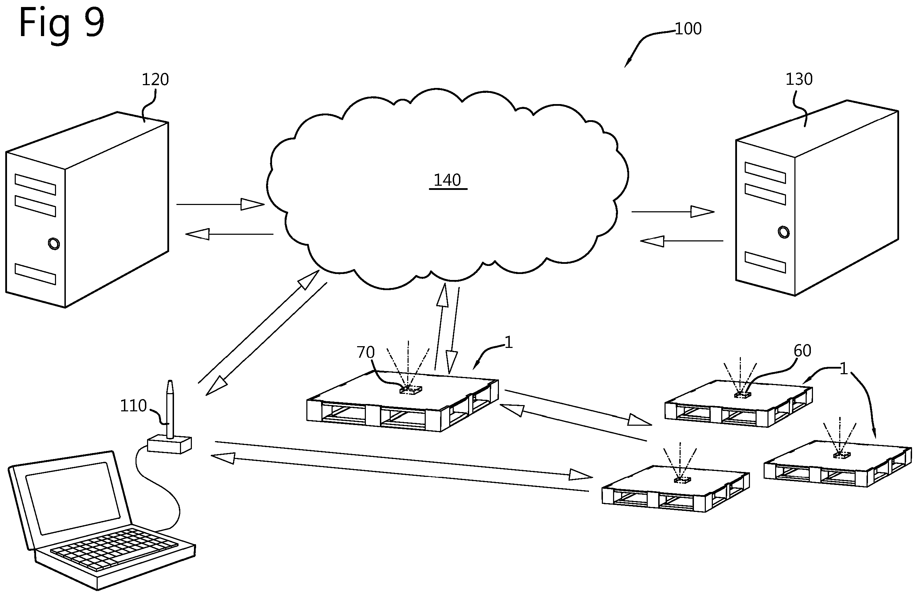

Figure 9 gives a schematic overview of a pallet logistic system 100 according to one aspect of the invention. The system 100 comprises a plurality of pallets 1, a receiver 110, a network data server 120 and a customer server 130. The receiver 110, network data server 120 and customer server 130 are linked to each other through the Internet 140 and have Cloud data storage. The system 100 also includes a master pallet 1'. The pallets 1 are as described above, each of which including a respective electronic tag 60. The master pallet 1' is otherwise identical to the pallets 1, with the exception that it includes additional communication capability in the form of a gateway device 70 having a 3G modem chip enabling it to communicate directly with a telecom provider. It will be understood that other levels of communication may be equally applicable including 4G, 5G, LTE or other. The gateway device 70 is also enabled to interrogate the tags 60 of any normal pallets 1 that are within range.

Operation of the system 100 will further be described with reference to Figures 8 and 9. In normal operation, the tags 60 on pallets 1 communicate wirelessly with the receiver 110 to the extent that they are in range. This may be the case when they enter or exit a warehouse facility, whereby the receiver 110 is located at an entrance or exit. The receiver 110 may also be mobile, e.g. located onboard a lorry, train or vessel. The tags 60 are set to 'ping' or emit a signal containing status information at predetermined times. This time period varies according to the status of the pallet 1. If the pallet 1 is stationary, as determined by the accelerometer 68, the tag 60 pings every 60 minutes. If the accelerometer 68 detects motion of the pallet 1, the processor 61 instructs the input-output device 63 to ping every 60 seconds. In this manner, the life of battery 62 is preserved (these ping times are exemplary and may be varied according to the requirements of the situation).

The ping signal contains information stored by the memory 65 since the last communication with an external source. This may include data collected from the temperature sensor 67, the accelerometer 68 and the load sensor device 71, all of which is time stamped based on the clock 66 and provided with the pallet unique identity. In this manner, complete data relating to the environment in which the pallet 1 has found itself can be recorded and subsequently transmitted. The ping signal is received by receiver 110, which acts as a gateway, for further transmission of the information to the internet 140. All this data is stored in the network data server 120, which will be used by the operator for operating the pallet pool. This network data server 120 will have the possibility to make available, via an Application Programming Interface or API, customer specific subsets of this data to customer servers 130 for use in their own IT systems.

In an alternative mode of operation, the gateway device 70 on the master pallet 1' is able to receive the ping signal from the pallets 1 when they are within range. This may be the case if the master pallet 1' is present in a consignment of normal pallets 1. In that case, the gateway device 70 may be able to continuously communicate data from the pallets 1 throughout their journey. The gateway device 70 can transmit this data directly to the internet 140.

It will be understood that based on the above system 100, the data that can be made available to the network data server 120 and the customer server 130 is limitless. Not only can data be generated in bulk relating to all pallets 1 within the system 100 but also individual data can be generated regarding the status of a particular pallet 1 and its load. The momentary position of a pallet 1 and its previous trajectory can be determined as can the environmental conditions (in this case temperature) to which it has been exposed. Additional sensors may be provided for all other detectable conditions that may be of interest. The condition of a pallet 1 may be determined by identifying sudden shocks or excessive loading using the respective accelerometer 68 and load sensors 69. This may be used to plan periodic maintenance or checks. Additionally, an individual pallet 1 may be interrogated by scanning the identity in a suitable manner to directly determine its status. For example a barcode allows an enabled mobile device such as a smartphone to extract data from the Internet 140 relating to recently received information transmitted from the tag 60 on the pallet 1.

## Claims

1. A pallet (1), or like platform, for supporting a load to be lifted or lowered, comprising:
- a deck (10) having a deck upper surface (12) for placing the load thereon,
- a load sensor device (71), comprising a weighing element (87) included in a measuring circuit,
**characterized in that**,
- the weighing element (87) contacts the deck (10) over a contact area such that the weighing element deforms in unity with the deck and an electrical property of the weighing element varies with the deformation of the weighing element.

2. A pallet according to claim 1, comprising a support structure (20, 30) for spacing the deck (10) from a supporting surface like a floor, wherein the weighing element (87) is restricted between the support structure and the deck, in particular constrained with respect to movement of the weighing element transverse with respect to the deck upper surface.

3. A pallet according to claim 1 or 2, wherein the weighing element (87) contacts the deck over the contact area through a spacing member (77) arranged between the deck and the weighing element.

4. A pallet according to any of the preceding claims, the deck having a deck lower surface (14), wherein the weighing element contacts the deck lower surface over the contact area.

5. A pallet according to claim 2, wherein the support structure comprises at least one block (20E) for spacing the deck from the supporting surface and the weighing element is restricted between the block and the deck lower surface, wherein the at least one block comprises a central block, and/or wherein the block comprises a receptacle (72) and the weighing element is at least partly, in particular entirely, arranged in the receptacle, and/or wherein the receptacle (72) is sized such that it extends beyond a side of the weighing element opposite the deck lower surface to facilitate deformation of the weighing element.

6. A pallet according to claim 5, wherein the weighing element (87) comes into abutment with the block at the outer circumference of the weighing element only.

7. A pallet according to any of the preceding claims, wherein the weighing element comprises a layered structure (82, 83, 84, 85).

8. A pallet according to claim 7, wherein the weighing element comprises a flexible layer (85) facing the deck, wherein the flexible layer defines the contact area, and/or wherein the spacing member (77) is included in the flexible layer (85), and/or wherein the flexible layer comprises an adhesive to secure the weighing element to the deck, and/or wherein the adhesive is electrically conductive, and in particular the conductive properties change due to deformation of the flexible layer, and/or wherein the weighing element comprises a pair of layers (82, 84) that form a cavity (86) in between the pair of layers.

9. A pallet according to any of preceding claims 7-8, wherein the weighing element comprises a multilayer PCB having a spacing layer that allows a neighbouring layer to deform, in particular to flex in unity with the deck.

10. A pallet according to any of the preceding claims, wherein the weighing element comprises a plurality of measurement sections, wherein in particular the plurality of measurement sections are spatially distributed over the weighing element to facilitate discrimination between different modes of deformation of the deck.

11. A pallet according to any of the preceding claims, wherein the deck upper surface for placing the load thereon is a unitary or monolithic load supporting surface.

12. A pallet according to any of the preceding claims, comprising a skid (30), wherein the at least one block (20E), in particular a plurality of blocks, spaces/space the deck (10) from the skid (30).

13. A pallet according to any of the preceding claims, comprising a number of weighing elements (87), wherein each respective weighing element is integrated in a respective block.

14. A pallet according to any of the preceding claims, comprising means (60) to communicate data in a wireless manner, the data comprising a pallet identification and a degree of load on the pallet.

15. Method for manufacturing a pallet according to a preceding claim, comprising calibrating the load sensor device, in particular calibrating the load sensor device after integrating the load sensor device with the pallet.

## Patentansprüche

1. Palette (1) oder eine ähnliche Plattform zum Tragen einer anzuhebenden oder abzusenkenden Last, umfassend:
- ein Deck (10) mit einer Deckoberseite (12) zum Auflegen der Last darauf
- eine Lastsensorvorrichtung (71), die ein Wägeelement (87) umfasst, das in einem Messkreis enthalten ist,
**dadurch gekennzeichnet, dass**,
- das Wägeelement (87) das Deck (10) über einen Kontaktbereich berührt, so dass sich das Wägeelement in Einheit mit dem Deck verformt und eine elektrische Eigenschaft des Wägeelements mit der Verformung des Wägeelements variiert.

2. Palette nach Anspruch 1, umfassend eine Stützstruktur (20, 30) zum Beabstanden des Decks (10) von einer Stützfläche wie einem Boden, wobei das Wägeelement (87) zwischen der Stützstruktur und dem Deck begrenzt ist, insbesondere eingeschränkt in Bezug auf eine Bewegung des Wägeelements quer zur Deckoberseite.

3. Palette nach Anspruch 1 oder 2, wobei das Wägeelement (87) das Deck über die Kontaktfläche durch ein zwischen dem Deck und dem Wägeelement angeordnetes Abstandselement (77) berührt.

4. Palette nach einem der vorhergehenden Ansprüche, wobei das Deck eine Deckunterseite (14) aufweist und das Wägeelement die Deckunterfläche über die Kontaktfläche berührt.

5. Palette nach Anspruch 2, wobei die Stützstruktur mindestens einen Block (20E) umfasst, um das Deck von der Stützfläche zu beabstanden, und das Wägeelement zwischen dem Block und der Deckunterseite begrenzt ist, wobei der mindestens eine Block einen zentralen Block umfasst, und/oder wobei der Block eine Aufnahme (72) umfasst und das Wägeelement mindestens teilweise, insbesondere vollständig, in der Aufnahme angeordnet ist, und/oder wobei die Aufnahme (72) so bemessen ist, dass sie sich über eine Seite des Wägeelements gegenüber der Deckunterseite hinaus erstreckt, um eine Verformung des Wägeelements zu erleichtern.

6. Palette nach Anspruch 5, wobei das Wägeelement (87) nur am äußeren Umfang des Wägeelements an den Block stößt.

7. Palette nach einem der vorhergehenden Ansprüche, wobei das Wägeelement eine Schichtstruktur (82, 83, 84, 85) aufweist.

8. Palette nach Anspruch 7, wobei das Wägeelement eine flexible Schicht (85) umfasst, die dem Deck zugewandt ist, wobei die flexible Schicht den Kontaktbereich definiert, und/oder wobei das Abstandselement (77) in der flexiblen Schicht (85) enthalten ist, und/oder wobei die flexible Schicht einen Klebstoff umfasst, um das Wägeelement an dem Deck zu befestigen, und/oder wobei der Klebstoff elektrisch leitfähig ist und sich insbesondere die leitfähigen Eigenschaften aufgrund einer Verformung der flexiblen Schicht ändern, und/oder wobei das Wägeelement ein Paar von Schichten (82, 84) umfasst, die einen Hohlraum (86) zwischen dem Paar von Schichten bilden.

9. Palette nach einem der vorhergehenden Ansprüche 7 - 8, wobei das Wägeelement eine mehrschichtige PCB mit einer Abstandsschicht umfasst, die es einer benachbarten Schicht ermöglicht, sich zu verformen, insbesondere sich in Einheit mit dem Deck zu biegen.

10. Palette nach einem der vorhergehenden Ansprüche, wobei das Wägeelement mehrere Messabschnitte umfasst, wobei insbesondere die mehreren Messabschnitte räumlich über das Wägeelement verteilt sind, um die Unterscheidung zwischen verschiedenen Arten der Verformung des Decks zu erleichtern.

11. Palette nach einem der vorhergehenden Ansprüche, wobei die Deckoberseite zum Auflegen der Last eine einheitliche oder monolithische Ladungsträgerfläche ist.

12. Palette nach einem der vorhergehenden Ansprüche, umfassend einen Schlitten (30), wobei der mindestens eine Block (20e), insbesondere eine Mehrzahl von Blöcken, das Deck (10) vom Schlitten (30) beabstandet/beabstanden.

13. Palette nach einem der vorhergehenden Ansprüche, mit einer Anzahl von Wägeelementen (87), wobei jedes Wägeelement in einen entsprechenden Block integriert ist.

14. Palette nach einem der vorhergehenden Ansprüche, umfassend eine Einrichtung (60) zur drahtlosen Datenübertragung, wobei die Daten eine Palettenkennung und den Grad der Belastung der Palette umfassen.

15. Verfahren zur Herstellung einer Palette nach einem der vorhergehenden Ansprüche, umfassend das Kalibrieren der Lastsensoreinrichtung, insbesondere das Kalibrieren der Lastsensoreinrichtung nach dem Integrieren der Lastsensoreinrichtung in die Palette.

## Revendications

1. Palette (1), ou plate-forme similaire, pour supporter une charge à soulever ou à abaisser, comprenant :
- un plateau (10) ayant une surface supérieure de plateau (12) pour y placer la charge,
- un dispositif capteur de charge (71), comprenant un élément de pesage (87) inclus dans un circuit de mesure,
**caractérisé en ce que**,
- l'élément de pesage (87) entre en contact avec le plateau (10) sur une zone de contact telle que l'élément de pesage se déforme conjointement avec le plateau et qu'une propriété électrique de l'élément de pesage varie avec la déformation de l'élément de pesage.

2. Palette selon la revendication 1, comprenant une structure de support (20, 30) pour espacer le plateau (10) d'une surface de support telle qu'un sol, où l'élément de pesage (87) est limité entre la structure de support et le plateau, en particulier contraint par rapport au mouvement de l'élément de pesage transversal par rapport à la surface supérieure de plateau.

3. Palette selon la revendication 1 ou 2, où l'élément de pesage (87) entre en contact avec le plateau sur la zone de contact à travers un élément d'espacement (77) disposé entre le plateau et l'élément de pesage.

4. Palette selon l'une quelconque des revendications précédentes, le plateau ayant une surface inférieure de plateau (14), où l'élément de pesage entre en contact avec la surface inférieure du plateau sur la zone de contact.

5. Palette selon la revendication 2, où la structure de support comprend au moins un bloc (20e) pour espacer le plateau de la surface de support et l'élément de pesage est limité entre le bloc et la surface inférieure de plateau, où l'au moins un bloc comprend un bloc central, et/ou où le bloc comprend un réceptacle (72) et l'élément de pesage est au moins en partie, en particulier entièrement, disposé dans le réceptacle, et/ou où le réceptacle (72) est dimensionné de telle sorte qu'il s'étend au-delà d'un côté de l'élément de pesage opposé à la surface inférieure de plateau pour faciliter la déformation de l'élément de pesage.

6. Palette selon la revendication 5, où l'élément de pesage (87) vient en butée avec le bloc à la circonférence extérieure de l'élément de pesage uniquement.

7. Palette selon l'une quelconque des revendications précédentes, où l'élément de pesage comprend une structure en couches (82, 83, 84, 85).

8. Palette selon la revendication 7, où l'élément de pesage comprend une couche flexible (85) faisant face au plateau, où la couche flexible définit la zone de contact, et/ou où l'élément d'espacement (77) est inclus dans la couche flexible (85), et/ou où la couche flexible comprend un adhésif pour sécuriser l'élément de pesage au plateau, et/ou où l'adhésif est électriquement conducteur, et en particulier les propriétés conductrices changent en raison de la déformation de la couche flexible, et/ou où l'élément de pesage comprend une paire de couches (82, 84) qui forment une cavité (86) entre la paire de couches.

9. Palette selon l'une quelconque des revendications précédentes 7 à 8, où l'élément de pesage comprend un PCB multicouche ayant une couche d'espacement qui permet à une couche voisine de se déformer, en particulier de fléchir conjointement avec le plateau.

10. Palette selon l'une quelconque des revendications précédentes, où l'élément de pesage comprend une pluralité de sections de mesure, où en particulier la pluralité de sections de mesure sont spatialement distribuées sur l'élément de pesage pour faciliter la discrimination entre différents modes de déformation du plateau.

11. Palette selon l'une quelconque des revendications précédentes, où la surface supérieure de plateau pour y placer la charge est une surface de support de charge unitaire ou monolithique.

12. Palette selon l'une quelconque des revendications précédentes, comprenant un patin (30), où l'au moins un bloc (20e), en particulier une pluralité de blocs, espace/espacent le plateau (10) du patin (30).

13. Palette selon l'une quelconque des revendications précédentes, comprenant un nombre d'éléments de pesage (87), où chaque élément de pesage respectif est intégré dans un bloc respectif.

14. Palette selon l'une quelconque des revendications précédentes, comprenant des moyens (60) pour communiquer des données de manière sans fil, les données comprenant une identification de palette et un degré de charge sur la palette.

15. Procédé de fabrication d'une palette selon une revendication précédente, comprenant le calibrage du dispositif capteur de charge, en particulier le calibrage du dispositif capteur de charge après intégration du dispositif capteur de charge avec la palette.
